# EUROPÄISCHE PATENTSCHRIFT

(11) **EP 3 164 578 B1**
(45) Veröffentlichungstag und Bekanntmachung des Hinweises auf die Patenterteilung: **03.06.2020**
(21) Anmeldenummer: 15734592.7
(22) Anmeldetag: 23.06.2015
(51) Int. Cl.: F01D 25/30, F02C 6/12

(54) **ABSTRÖMBEREICH EINER TURBINE EINES ABGASTURBOLADERS**
DISCHARGE REGION OF A TURBOCHARGER TURBINE
ZONE D'ÉVACUATION D'UNE TURBINE D'UN TURBOCOMPRESSEUR À GAZ D'ÉCHAPPEMENT

(30) Priorität: 03.07.2014 DE 102014109298
(43) Veröffentlichungstag der Anmeldung: 10.05.2017
(73) Patentinhaber: ABB Turbo Systems AG, 5400 Baden (CH)
(72) Erfinder: WEICKGENANNT, Ansgar, CH-4310 Rheinfelden (CH); SOFIA, Alessandro, CH-6963 Pegassona (CH); RUSCH, Daniel, 5430 Wettingen AG (CH); PHILLIPSEN, Bent, CH-5406 Rütihof (CH)
(74) Vertreter: Zimmermann & Partner Patentanwälte mbB
(86) Internationale Anmeldenummer: PCT/EP2015/064017
(87) Internationale Veröffentlichungsnummer: WO 2016/001002

(56) Entgegenhaltungen:
- DE-A1-102011 012 039
- GB-A- 2 508 164
- US-A- 5 467 591

## Beschreibung

### Technisches Gebiet

Die Erfindung bezieht sich auf das Gebiet der Abgasturbolader für aufgeladene Brennkraftmaschinen. Sie betrifft einen Abströmbereich einer Turbine solcher Abgasturbolader sowie einen Abgasturbolader mit einer Turbine mit einem derartigen Abströmbereich.

Moderne Brennkraftmaschinen werden mit ein- oder mehrstufigen Abgasturboladern aufgeladen. Dabei werden die heissen Abgase aus dem Brennraum über eine Turbine geleitet, welche einen Verdichter zum Verdichten der für die Verbrennung benötigte Frischluft antreibt. In grossen Abgasturboladern werden vorwiegend Axialturbinen und Radialverdichter eingesetzt, in kleineren Abgasturboladern werden auch Radial- oder Mixed-Flow-Turbinen eingesetzt.

Trotz sorgfältiger Gestaltung der Diffusoren im Abströmbereich von Abgasturbinen kommt es ab einem bestimmten flächengemittelten Drallwinkel zu Strömungsablösungen an der Kontur der Innenwand des Diffusors. Um Strömungsablösungen zu verhindern muss das Schluckvermögen der Turbinen reduziert werden, womit sich der Betriebsbereich verkleinert und der Wirkungsgrad der Turbine verschlechtert.

In Turbinendiffusoren oder Übergängen zwischen zwei Turbinenstufen bei zweistufiger Aufladung werden heute erfolgreich sogenannte Vortex-Generatoren eingesetzt, um die laminare Strömung in der Grenzschicht in eine turbulente Strömung zu überführen und so die Ablösung der Strömung aufgrund des zunehmenden Druckgradienten zu verhindern. Insbesondere bei grossen Abgasturboladern hat sich jedoch gezeigt, dass Vortex-Generatoren nur eine ungenügende Wirkung entfalten können.

Eine andere Möglichkeit, besonders bei Strömungen mit hoher Drallkomponente ist der Einsatz eines Nachleitrades, welches die Drallkomponente der Strömung nach dem Turbinenrad reduziert. Derartige Bauten sind jedoch teuer und aufgrund der Fehlanströmung ausserhalb des Auslegepunktes mit hohen Strömungsverlusten verbunden.

Schliesslich bleibt zur Verhinderung der Strömungsablösung die Erhöhung der axialen Geschwindigkeitskomponente im Bereich des Schaufelfusses der Turbine durch Verminderung der Schaufelbelastung in diesem Bereich. Die Reduktion der Schaufelbelastung reduziert jedoch direkt die Arbeitsentnahme und wirkt sich somit schlecht auf den Wirkungsgrad der Turbine aus. Zudem erfolgt diese Massnahme oft weit stromauf des Ablösepunktes und die Wirkung ist reduziert, da der Abstand zu gross ist.

### Stand der Technik

US 2011-0058939 A1 offenbart ein Abgas-Diffusor System einer Antriebsturbine mit Düsen zum Einblasen eines gasförmigen Mediums entlang der radial innenliegenden Kontur des Strömungskanals.

US 5,467,591 offenbart eine Gasturbine mit einem Abgas-Diffusor System mit einem Rezirkulator im radial aussenliegenden Wandbereich.

DE 10 2011 012 039 A1 offenbart einen Strömungskanal im Diffusorbereich eines Axialgebläses mit Strömungsleitflächen, welche ein Teil des Arbeitsfluids aus einer Zone höherer Strömungsgeschwindigkeit in eine Zone mit niedriger Strömugnsgeschwindigkeit leiten.

GB 2508164 A offenbart einen Diffusor, insbesondere für einen Abgasturbolader, der einen Turbinenrotor mit einer Reihe von umlaufend angeordneten Schaufeln aufweist und um eine Drehachse drehbar ist, um Energie aus einem zwischen den Schaufeln verlaufenden Arbeitsgasstrom zu gewinnen. Der Diffusor weist einen Einlass auf, der das Gas vom Rotor aufnimmt, und einen Auslass, durch den das Gas abgegeben wird. Die Strömungsfläche des Auslasses ist größer als die Strömungsfläche des Einlasses, so dass ein Teil der kinetischen Energie des aufgenommenen Gases im Diffusor zurückgewonnen wird. Der Diffusor weist ferner eine Reihe von umlaufend angeordneten zaunartigen Elementen auf, die sich jeweils in Längsrichtung in Strömungsrichtung durch den Diffusor und quer über einen Abschnitt der Spannweite des Diffusors erstrecken, um den Gasstrom durch den Diffusor umzuleiten. Vorzugsweise werden die zaunartigen Elemente bis zu 20° zur Achse des Rotors ausgerichtet.

### Kurze Darstellung der Erfindung

Die Aufgabe der vorliegenden Erfindung besteht darin, mit einfachen Mitteln Strömungsablösungen an der Kontur der Innenwand des Diffusors im Abströmbereich einer Abgasturbine zu verhindern.

Die Aufgabe wird gelöst durch den Gegenstand des Anspruchs 1. Insbesondere wird erfindungsgemäß ein Abströmbereich einer Turbine eines Abgasturboladers bereitgestellt, der einen ringrohrförmigen Strömungskanal stromabwärts des Turbinenrades umfasst. Der Strömungskanal umfasst einen Diffusor mit in Strömungsrichtung zunehmendem Strömungskanal-Querschnitt. Im Diffusor im Bereich der radial innen angeordneten Innenwand des Strömungskanals ist zur Erhöhung des Druckrückgewinns ein in Umfangsrichtung wirkender Strömungsgleichrichter mit mehreren Leitelementen angeordnet. Die Leitelemente erstrecken sich über zwanzig bis sechzig Prozent der mittleren, radialen Strömungskanalhöhe im Bereich der Leitelemente, wobei zusätzliche Mittel zur Erhöhung des Druckrückgewinns in Form eines Rezirkulators in die radial innen angeordnete Innenwand des Strömungskanals eingelassen sind. Der Rezirkulator umfasst mindestens eine Rezirkulator-Kammer, welche mindestens eine stromabwärtige Einströmöffnung mit mindestens einer stromaufwärtigen Abströmdüse verbindet.

Die Erfindung ist einfach und kostengünstig in die Diffusorwand zu integrieren und erhöht den Wirkungsgrad der Turbinenstufe deutlich. Dank der erfindungsgemässen Ausgestaltung des Abströmbereichs der Abgasturbine kann der Betriebsbereich der Turbine hin zu höheren Schluckvermögen erweitert werden, Dies geht mit einer Erhöhung des Wirkungsgrades einher. Ein mit einer Abgasturbine mit einem erfindungsgemäss ausgestalteten Abströmbereich ausgestatteter Abgasturbolader kann somit bei gleicher Leistung einen grösseren, teureren Abgasturbolader ersetzen.

Weitere Vorteile ergeben sich aus den abhängigen Ansprüchen.

### Kurze Beschreibung der Zeichnungen

Nachfolgend werden anhand der schematischen Darstellungen in den Figuren Ausführungsformen des ausgebildeten Abströmbereichs einer Axialturbine beschrieben. Dabei zeigt:
- Fig. 1: einen Schnitt entlang der Wellenachse durch eine Axialturbine mit einem Strömungsgleichrichter,
- Fig. 2: einen entlang II-II geführten Schnitt (senkrecht zur Wellenachse) durch den Strömungsgleichrichter der Axialturbine nach Fig. 1,
- Fig. 3: einen Schnitt entlang der Wellenachse durch eine Axialturbine mit einem Rezirkulator,
- Fig. 4: einen entlang IV-IV geführten Schnitt (senkrecht zur Wellenachse) durch den Rezirkulator der Axialturbine nach Fig. 3,
- Fig. 5: einen Schnitt entlang der Wellenachse durch eine Axialturbine mit einem erfindungsgemässen Strömungsgleichrichter und einem erfindungsgemässen Rezirkulator, und
- Fig. 6: einen entlang IV-IV geführten Schnitt (senkrecht zur Wellenachse) durch den Strömungsgleichrichter und den Rezirkulator der Axialturbine nach Fig. 5.

### Weg zur Ausführung der Erfindung

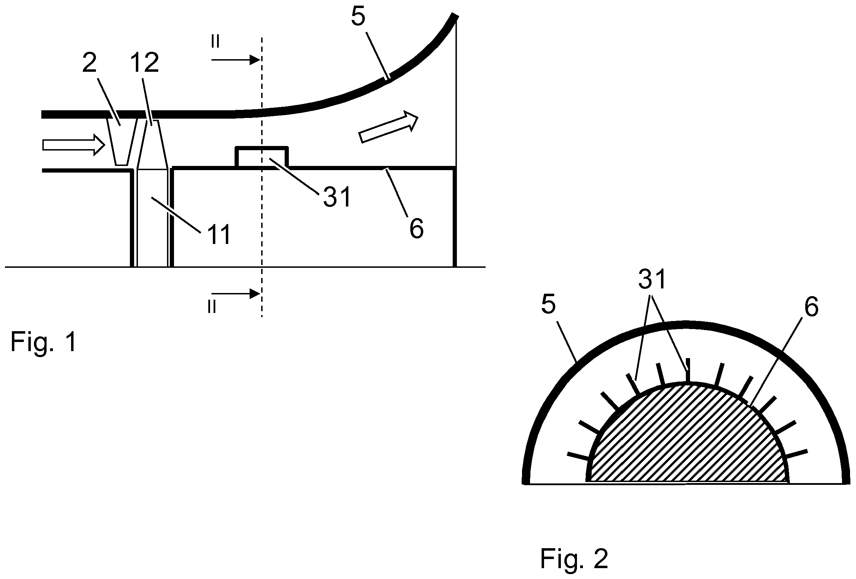

Fig. 1 zeigt schematisch in einem entlang der Wellenachse geführten Schnitt durch eine Axialturbine eines Abgasturboladers den Strömungsbereich unmittelbar vor dem Turbinenrad sowie den Abströmbereich stromabwärts des Turbinenrades. Die mit Pfeilen angedeutete Strömung erfolgt in der Darstellung von links nach rechts. Dabei trifft die aus den Brennkammern einer Brennkraftmaschine kommende Abgasströmung nach dem Eintritt in das Turbinengehäuse auf eine Leitvorrichtung (Düsenring) mit mehreren, entlang des Umfangs verteilten Leitelementen 2. Die Leitelemente der Leitvorrichtung richten die Strömung auf die unmittelbar darauf folgenden Laufschaufeln 12 des Turbinenrades aus. Das Turbinenrad weist eine Vielzahl dieser Laufschaufeln auf, welche auf einem mit der Welle (nicht dargestellt) verbundenen Nabenkörper 11 angeordnet sind. Das Turbinenrad wird durch die auf die Laufschaufeln wirkende Abgasströmung in Rotation versetzt und treibt im Abgasturbolader über die Welle ein Verdichterrad an. Stromabwärts des Turbinenrades weitet sich der Strömungskanal auf, im sogenannten Diffusor. Der Querschnitt des ringförmigen Strömungskanals nimmt dabei über einen gewissen Bereich kontinuierlich an Fläche zu, insbesondere dadurch, dass die Aussenwand 5 gegen radial aussen hin aufgebogen ist.

Um die Ablösung der Strömung an der Innenwand des Diffusors wirkungsvoll zu verhindern, wird nach Fig. 1 und Fig. 2 der Abströmbereich der Axialturbine mit einem Gleichrichter versehen. Dabei werden entlang der Innenwand 6 des Diffusors über den Umfang verteilt profilierte Bleche als Leitelemente 31 angeordnet. Die maximale Höhe der Leitelemente 31 kann ein Viertel bis maximal die Hälfte der mittleren Kanalhöhe im Bereich der Leitelemente betragen. Die Länge der Leitelemente können auf rund das Doppelte bis maximal das Vierfache der mittleren Kanalhöhe im Bereich der Leitelemente festgelegt werden. Die Position des Gleichrichters ist typischerweise im Bereich des Ablösepunkts zu wählen, wobei die Eintrittskanten der Leitelemente stromauf des Ablösepunktes zu liegen kommen.

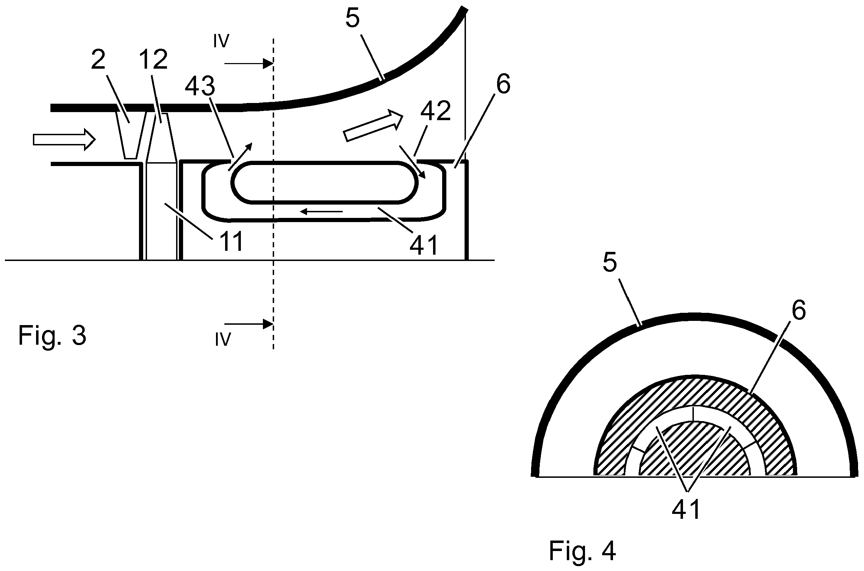

In Fig. 3 und Fig. 4 ist in die Innenwand 6 des Diffusors ein Rezirkulator eingelassen. Diese Strömungsrückführung umfasst im wesentlichen zwei Öffnungen zum Strömungskanal, welche über eine Rückführleitung miteinander verbunden sind. Stromabwärts des Ablösepunkts, im Bereich des Diffusoraustritts umfasst der Rezirkulator eine Einströmöffnung 42. Die Einströmöffnung ist über die parallel zum Strömungskanal geführte Rezirkulator-Kammer 41 mit einer Abströmdüse 42 verbunden, welche dicht stromauf der Ablösestelle angeordnet ist. Beide Öffnungen sind als Ringspalte ausgeführt. Zumindest die Abströmdüse ist als Coanda Düse geformt, deren Öffnung stromab zeigt, damit das Fluid aus dem Rezirkulator wandparallel in die Hauptströmung eingebracht wird. Auch die Einströmöffnung kann entsprechend geformt sein, um ein wandparalleles Einströmen in den Rezirkulator zu ermöglichen, wobei sie hierfür stromauf zeigt. Die Strömung im Rezirkulator stellt sich aufgrund des Druckgradienten zwischen Einströmöffnung und Abströmdüse von selbst ein und es ist kein zusätzliches Druckerzeugungsorgan notwendig. Optional können in der Rezirkulator-Kammer strömungsleitende Elemente vorgesehen sein, welche die Strömung durch den Rezirkulator gleichrichten oder ihr eine definierte Umfangskomponente aufprägen und gleichzeitig als Stützen für den Wandeinsatz dienen, welcher die Rezirkulator-Kammer vom Strömungskanal trennt. Der Rezirkulator kann optional auch in mehrere Kammern unterteilt sein, wobei jede Kammer eine oder mehrere eigene Einströmöffnungen und Abströmdüsen umfassen kann, welche in diesem Fall dann als Ringsegmentspalte oder Bohrungen ausgeführt sind.

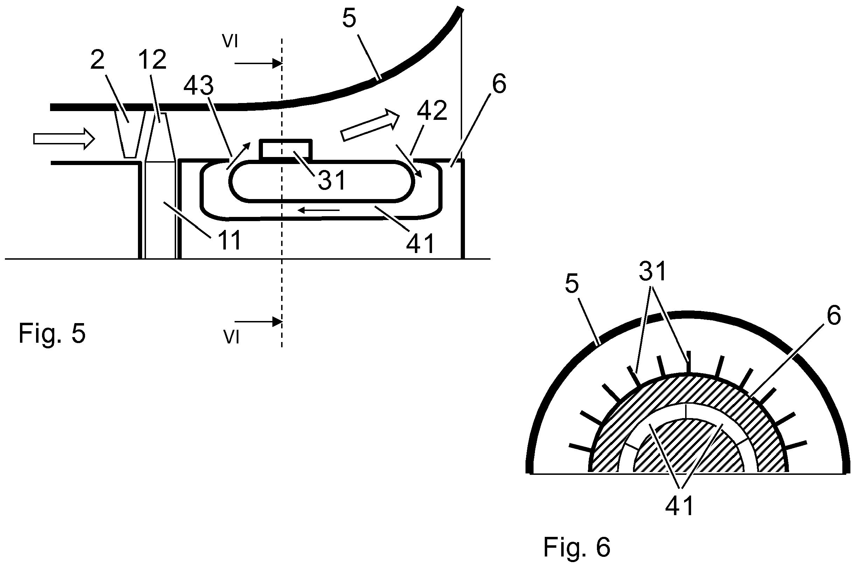

Fig. 5 und Fig. 6 zeigen die erfindungsgemäße Ausführungsform, in welcher die Merkmale die in Verbindung mit den Figuren 1 bis 4 beschrieben sind kombiniert sind. Dabei sind die Leitelemente 31 des Gleichrichters im Bereich des Wandeinsatzes angeordnet, welcher die Rezirkulator-Kammer vom Strömungskanal trennt.

Obwohl die Erfindung anhand des Beispiels der Axialturbine erklärt worden ist, soll dies in keinem Fall einschränkende Wirkung auf die mögliche Verwendung der erfindungsgemässen Mittel für andere Turbinen von Abgasturboladern haben. Insbesondere lassen sich die erfindungsgemässen Mittel auch bei Radial- oder Mixed-Flow-Turbinen von Abgasturboladern einsetzen.

### Bezugszeichenliste

- 2: Leitelement vor den Turbinenschaufeln
- 11: Nabe des Turbinenrades
- 12: Turbinenschaufeln
- 31: Leitelemente des Strömungsgleichrichters
- 41: Rezirkulator-Kammer
- 42: Einströmöffnung
- 43: Abströmdüse
- 5: Aussenwand des Strömungskanals (Turbinengehäuse)
- 6: Innenwand des Strömungskanals (Turbinengehäuse)

## Patentansprüche

1. Abströmbereich einer Turbine eines Abgasturboladers, umfassend einen ringrohrförmigen Strömungskanal stromabwärts des Turbinenrades, wobei der Strömungskanal einen Diffusor mit in Strömungsrichtung zunehmendem Strömungskanal-Querschnitt umfasst, wobei im Diffusor im Bereich der radial innen angeordneten Innenwand (6) des Strömungskanals zur Erhöhung des Druckrückgewinns ein in Umfangsrichtung wirkender Strömungsgleichrichter mit mehreren Leitelementen (31) angeordnet ist, dessen Leitelemente sich über zwanzig bis sechzig Prozent der mittleren, radialen Strömungskanalhöhe im Bereich der Leitelemente erstrecken, **dadurch gekennzeichnet, dass** zusätzliche Mittel zur Erhöhung des Druckrückgewinns in Form eines Rezirkulators in die radial innen angeordnete Innenwand (6) des Strömungskanals eingelassen sind, wobei der Rezirkulator mindestens eine Rezirkulator-Kammer (41) umfasst, welche mindestens eine stromabwärtige Einströmöffnung (42) mit mindestens einer stromaufwärtigen Abströmdüse (43) verbindet.

2. Abströmbereich einer Turbine nach Anspruch 1, wobei die mindestens eine Abströmdüse (43) als Coanda-Düse zum wandparallelen Einblasen des durch den Rezirkulator strömenden Fluids in den Strömungskanal ausgebildet ist.

3. Abströmbereich einer Turbine nach einem der Ansprüche 1 oder 2, wobei die mindestens eine Einströmöffnung (43) als Coanda-Düse zur wandparallelen Entnahme des durch den Rezirkulator strömenden Fluids aus dem Strömungskanal ausgebildet ist.

4. Abströmbereich einer Turbine nach einem der Ansprüche 1 bis 3, wobei in der Rezirkulator-Kammer strömungsleitende Elemente angeordnet sind.

5. Abgasturbolader, umfassend eine Axialturbine mit einem Abströmbereich nach einem der Ansprüche 1 bis 4.

6. Abgasturbolader, umfassend eine Radial- oder Mixed-Flow-Turbine mit einem Abströmbereich nach einem der Ansprüche 1 bis 4.

## Claims

1. Outflow region of a turbine of an exhaust gas turbocharger, comprising an annularly tubular flow duct downstream of the turbine wheel, the flow duct comprising a diffuser with a flow duct cross section which increases in the flow direction, a flow straightener which acts in the circumferential direction and has a plurality of guide elements (31) being arranged in the diffuser in the region of the radially inwardly arranged inner wall (6) of the flow duct in order to increase the pressure recovery, the guide elements of which flow straightener extend over from 20 to 60% of the mean, radial flow duct height in the region of the guide elements, **characterized in that** additional means for increasing the pressure recovery are let in the form of a recirculator into the radially inwardly arranged inner wall (6) of the flow duct, the recirculator comprising at least one recirculator chamber (41) which connects at least one downstream inflow opening (42) to at least one upstream outflow nozzle (43).

2. Outflow region of a turbine according to Claim 1, the at least one outflow nozzle (43) being configured as a Coanda nozzle for injecting the fluid which flows through the recirculator into the flow duct in a manner which is parallel to the wall.

3. Outflow region of a turbine according to either of Claims 1 and 2, the at least one inflow opening (43) being configured as a Coanda nozzle for removing the fluid which flows through the recirculator from the flow duct in a manner which is parallel to the wall.

4. Outflow region of a turbine according to one of Claims 1 to 3, flow-guiding elements being arranged in the recirculator chamber.

5. Exhaust gas turbocharger, comprising an axial turbine with an outflow region according to one of Claims 1 to 4.

6. Exhaust gas turbocharger, comprising a radial or mixed-flow turbine with an outflow region according to one of Claims 1 to 4.

## Revendications

1. Zone d'évacuation d'une turbine d'un turbocompresseur à gaz d'échappement, comprenant un canal d'écoulement en forme de tuyau annulaire en aval de la roue de turbine, le canal d'écoulement comprenant un diffuseur avec une section transversale de canal d'écoulement augmentant dans la direction d'écoulement, un redresseur d'écoulement agissant dans la direction périphérique, avec plusieurs éléments conducteurs (31) étant disposé dans le diffuseur dans la région de la paroi intérieure (6) disposée radialement à l'intérieur du canal d'écoulement pour augmenter la récupération de pression, dont les éléments conducteurs s'étendent sur 20 à 60 % de la hauteur moyenne radiale du canal d'écoulement dans la région des éléments conducteurs, **caractérisée en ce que** des moyens supplémentaires pour augmenter la récupération de pression sous forme de recirculateur sont incorporés dans la paroi intérieure (6) du canal d'écoulement disposée radialement à l'intérieur, le recirculateur comprenant au moins une chambre de recirculateur (41) qui relie au moins une ouverture d'afflux aval (42) à au moins une buse d'évacuation amont (43).

2. Zone d'évacuation d'une turbine selon la revendication 1, dans laquelle l'au moins une buse d'évacuation (43) est réalisée sous forme de buse Coanda pour l'injection, parallèle à la paroi, du fluide s'écoulant à travers le recirculateur dans le canal d'écoulement.

3. Zone d'évacuation d'une turbine selon l'une quelconque des revendications 1 et 2, dans laquelle l'au moins une ouverture d'afflux (43) est réalisée sous forme de buse Coanda pour prélever parallèlement à la paroi le fluide s'écoulant à travers le recirculateur hors du canal d'écoulement.

4. Zone d'évacuation d'une turbine selon l'une quelconque des revendications 1 à 3, dans laquelle des éléments guidant l'écoulement sont disposés dans la chambre de recirculateur.

5. Turbocompresseur à gaz d'échappement comprenant une turbine axiale avec une zone d'évacuation selon l'une quelconque des revendications 1 à 4.

6. Turbocompresseur à gaz d'échappement comprenant une turbine à écoulement radial ou une turbine à écoulement mixte avec une zone d'évacuation selon l'une quelconque des revendications 1 à 4.
